# EUROPEAN PATENT APPLICATION

(11) **EP 3 916 698 A1**
(43) Date of publication of application: **01.12.2021**
(21) Application number: 20177482.5
(22) Date of filing: 29.05.2020
(51) Int. Cl.: G08G 5/00, G08G 5/02, G08G 5/04, H04L 1/22

(54) **SYSTEM AND METHOD FOR MANAGING AIRCRAFT OPERATION**

(71) Applicant: Volocopter GmbH, 76646 Bruchsal (DE)
(72) Inventor: Adolf, Florian-Michael, 60486 Frankfurt (Main) (DE); Bomart, Sébastien, 67480 Roeschwoog (FR)
(74) Representative: Lemcke, Brommer & Partner Patentanwälte Partnerschaft mbB

(57) **Abstract**

We propose a system and a method for managing aircraft operation, said system comprising: at least one aircraft (6.4-6.6), preferably multiple aircraft; at least one landing site (2) for said aircraft (6.4-6.6), preferably multiple landing sites; a communication system (5; 6.6a) for transmitting a first signal (S1) indicative of at least a current state of said at least one landing site (2) to said at least one aircraft (6.4-6.6) and for receiving said first signal (S1) at said aircraft (6.4-6.6); an additional ground-based device (5c) for emitting a second signal (S2), which second signal (S2) is dependent from said current state of said at least one landing site (2); and an additional signal receiving device (6.6b) onboard said at least one aircraft (6.4-6.6) for receiving said second signal (S2); wherein the system is configured to perform landing of said at least one aircraft (6.4-6.6) at said at least one landing site (2) based on said first signal (S1) and on said second signal (S2); said first signal (S1) preferably including at least one of a number and a state of individual landing zones (4) at said at least one landing site (2), landing instructions, and, in the case of multiple landing sites (2) within the system, potential alternative landing sites (2).

## Description

The invention relates to a system for managing aircraft operation according to patent claim 1.

The invention also relates to a method of managing aircraft operation, preferably by means of the system according to the present invention, according to patent claim 10.

The present invention may advantageously be used in connection with multi-rotor aerial vehicles or VTOL (vertical take-off and landing) aircraft, preferably with electrically powered propulsion units (e.g., propellers or rotors), but is not limited in this respect.

Systems and methods for managing air traffic and aircraft operation are known, e.g., from prior art document US 2018/114450 A1 ("US'450") and from prior art document US 2019/144111 A1 ("US'111").

Document US'450 discloses an autonomous emergency flight management system for an unmanned aerial system which may find safe and clear landing sites for unmanned aerial systems (UASs) in emergency situations. Corresponding software may reside on an onboard computing system of the UASs and may continuously look at internal databases and input from other systems, such as GPS, cameras, radar, etc. A database may provide some local likely candidates for landing sites. Information associated with the candidates may include latitude, longitude, altitude for top of the building, etc. Position updates may be continuously provided from an autopilot or other suitable system.

Document US'111 discloses a portable unmanned aerial vehicle approach and departure zone protection platform, which comprises a base, an active monitoring sensor connected to the base, a processor connected to the base and a communication device connected to the base. The processor is configured to determine whether an object is present in an approach funnel associated with the base or platform.

As the use of airborne vehicles (or aircraft) for transportation between landing sites (or landing pads) was until now limited to some rare helicopter operation, most of the dedicated landing sites (helipads) are operated without any advanced equipment but mostly through the pilot himself and potentially a helipad operator.

Most of the current surveillance and monitoring systems applied for aircraft are targeting international airports or rural/partially prepared landing sites "anywhere". In contrast to this, the present invention is particularly useful in connection with so-called "vertiports", which is a new category since it comprises a designated landing site and can thus be regarded as a micro-airport or micro-aerodrome. Again, such vertiports are particularly well-suited as landing sites for VTOL aircraft. In the present disclosure, the terms "vertiport" and "landing site" will be used as synonyms (without restriction). A vertiport may comprise one or multiple individual "landing pads" or "landing zones", each of which can be used by one aircraft at a time.

In order to enable safe aircraft operation, in particular during landing, dedicated rules apply which require an interaction between the vertiports (landing sites) and the aircraft, which requirement includes "preparedness" of the aircraft onboard equipment.

It is the object of the present invention to provide a system and a method for aircraft operation which leads to increased operational safety, while potentially enabling equipment downscaling in order to reduce cost expenditure.

According to the present invention, this object is achieved by means of a system for managing aircraft operation as defined in patent claim 1 and by means of a method of managing aircraft operation as defined in patent claim 10.

Advantageous further embodiments of the invention are defined in the dependent claims.

According to a first aspect of the invention, a system for managing aircraft operation comprises: at least one aircraft, preferably multiple aircraft; at least one landing site for said aircraft, preferably multiple landing sites; a communication system for transmitting a first signal indicative of at least a current state of said at least one landing site to said at least one aircraft and for receiving said first signal at said aircraft; an additional ground-based device for emitting a second signal, which second signal is dependent from said current state of said at least one landing site; and an additional signal receiving device onboard said at least one aircraft for receiving said second signal; wherein the system is configured to perform landing of said at least one aircraft at said at least one landing site based on said first signal and on said second signal; said first signal preferably including at least one of a number and a state of individual landing zones at said at least one landing site, landing instructions, and, in the case of multiple landing sites, potential alternative landing sites.

According to a second aspect of the present invention, a method of managing aircraft operation, preferably by means of a system according to the present invention, comprises: providing at least one aircraft, preferably multiple aircraft; providing at least one landing site for said aircraft, preferably multiple landing sites; flying said at least one aircraft to a vicinity of said at least one landing site; receiving, at said at least one aircraft, a first signal indicative of at least a current state of said at least one landing site from said at least one landing site via a first channel; receiving, at said at least one aircraft, a first signal indicative of at least a current state of said at least one landing site from said at least one landing site via a second channel, said second channel being independent from said first channel; landing said at least one aircraft at said at least one landing site based on said first signal and on said second signal or, in the case of multiple landing sites, landing said at least one aircraft at another landing site based on said first signal and on said second signal from said other landing site; said first signal preferably including at least one of a number and a state of individual landing zones at said at least one landing site, landing instructions, and, in the case of multiple landing sites, potential alternative landing sites.

According to another aspect of the invention, the application focuses on serving landing sites (vertiports) for VTOL operation with a fixed setup comprising a vertiport monitoring system, multiple robust and redundant communication links to all VTOLs entering the vertiport's area (airspace) as well as communication between vertiports, air participants (aircraft) and finally to the U-space provider in an area of operation.

According to the definition at https://www.sesarju.eu/u-space, "U-space" is a set of new services relying on a high level of digitalization and automation of functions and specific procedures designed to support safe, efficient and secure access to airspace for large numbers of drones. As such, U-space is an enabling framework designated to facilitate any kind of routine mission, in all classes of airspace and all types of environment - even the most congested - while addressing an appropriate interface with manned aviation and air traffic control.

According to a preferred embodiment, a system according to the present invention may comprise computers, sensors, emitting devices and communication links that detect:
- a state of the vertiport's pads or landing sites (e.g., clear for landing or unsafe);
- the presence of (flying) object(s) around the vertiport airspace using, e.g., radar and optical ground-based detection systems;
- ground markers to support transmission of said vertiport state;
- airborne sensing devices to read information transmitted by said ground markers;
- communication devices for communication between:
   - vertiports;
   - VTOLs;
   - vertiports to U-space;
   - VTOLs to vertiports, and vice versa.

In an embodiment, the invention defines a set of vertiports that monitor their respective internal status (or state) and a respective surrounding airspace to provide air participants (aircraft) with a real-time situational awareness of potentially safe landing requests and/or the presence of intruders.

According to another embodiment, the invention may focus on establishing multiple redundant links between all participants to ensure propagation of said vertiport situational awareness to all of the described actors, i.e., other vertiports, VTOLs, U-space, etc.

According to a preferred embodiment of the invention, all of the vertiports can be connected and may share, at least with a neighbouring vertiport, the respective number of landing pads that are clear for landing, and its overall operational state.

In this context, the term "neighbouring vertiport" refers to any vertiport that is within a relatively small radius around an original destination vertiport due to the limited range of the aircraft considered here. A neighbouring vertiport does not necessarily have to be the closest vertiport in respect of an original destination vertiport.

Furthermore, according to an embodiment, besides their usual interconnection, each vertiport can be connected to a U-space provider which operates an area covered by the system according to the present invention. Although, most importantly, a state of a "neighboring" vertiport should be known at the destination vertiport, it is actually preferred that the overall state of all vertiports in a serviced area (city) is known at each epoch and at each vertiport.

Enhanced operational safety provided by the system according to the present invention is mainly due to the presence of said additional ground-based device which is configured for emitting said second signal, which second signal is dependent on a current state of a landing site (vertiport) in question. In this way, any aircraft, which participates in the system according to the present invention and which approaches said landing site, may use said second signal as an independent further channel to acquire information concerning a current state of the landing site in question. In this context, another (independent) channel for spreading said information in provided in said communication system, which communication system is devised for transmitting said first signal from the landing site in question to the aircraft. The first signal, too, is indicative of a current state of the landing site in question. As stated before, said current state may comprise information on whether or not a given landing site is currently available for landing of said aircraft or whether it has already been occupied, obstructed, destroyed, closed or reserved for priority (emergency) landing of another aircraft. This list is not meant to be exhaustive.

According to the present invention, the system is configured to perform landing of the aircraft in question at the landing site based on said first signal and based on said second signal, i.e., based on a combination of said first signal and said second signal. Preferably, only if both said signals indicate that the landing site is currently available for hosting the aircraft, landing of the aircraft at the landing site will be performed. Otherwise, the system will look for and/or provide alternatives, e.g., alternative landing sites.

The above-defined approach can be used to limit the amount of onboard equipment which must be present at each aircraft and which could, in principle, be reduced to a communication device (receiver) for said first signal and to said additional further receiving device onboard the aircraft for receiving the second signal.

In a further embodiment of the system according to the present invention, said communication system is a bi-directional communication system, which communication system is configured to allow transmitting a third signal indicative of at least a current state of said at least one aircraft and for receiving said third signal at said at least one landing site, wherein the system is configured to adapt a current state of said at least one landing site based on said third signal. In practice, said third signal could be a priority signal or a distress signal, with which the aircraft can inform a system of its present state in order to request, e.g., priority landing permission at a given landing site. This may occur, for example, if an aircraft experiences motor and/or battery failure. Adapting or changing a current state of said at least one landing site may comprise marking said landing site as occupied, so that it will no longer be available for other aircraft, even if said other aircraft had been scheduled for landing on said particular landing site before.

In another embodiment of the system according to the present invention, said at least one landing site comprises a first sensor device for detecting the presence of objects, in particular flying objects, in a space (airspace) surrounding said at least one landing site, said first signal and said second signal being dependent from an output of said first sensor device, said first sensor device preferably devised as a radar, lidar or sonar device. However, possible embodiments of said first sensor device are not limited to the types mentioned in the above (non-exhaustive) list. Furthermore, detecting the presence of objects is by no means limited to flying objects, but may comprise any other objects such as branches (of trees), cranes, cables, antennas, poles, etc.

In yet another embodiment of the system according to the present invention, said at least one landing site comprises a second sensor device for detecting the presence of objects, in particular ground-based objects, at said at least one landing site, said first signal and said second signal being dependent from an output of said second sensor device, said second sensor device preferably devised as a radar or electro-optical device. Again, detecting the presence of objects is not limited to the above-mentioned ground-based objects. Possible embodiments of said second sensor device are not limited to the types mentioned in the above (non-exhaustive) list. However, it is preferred that said second sensor device is devised for detecting ground-based objects which may obstruct or block a given landing site, e.g., people, cars, debris, grounded aircraft, etc.

In any case, if in an embodiment of a system according to the invention said first sensor device and said second sensor device do not indicate, by their respective measurements, that the landing site and its surrounding airspace are clear for landing of an aircraft, said first and second signals will indicate that said landing site is not available.

In order to further enhance system reliability, a highly preferred embodiment of the system according to the present invention proposes that said communication system and said additional signal receiving device are based on different technologies. In this way, a common failure of both channels can be safely ruled out if both channels were based on a common technology. Environmental conditions or other disturbances might otherwise lead to a situation in which no reliable information about the current state of a given landing site is available at the aircraft, which should be avoided.

Another embodiment of the system in accordance with the present invention proposes that, in the case of multiple aircraft, said aircraft comprise a transmitting device for relaying said first signal from an aircraft receiving said first signal to another aircraft (or to multiple other aircraft), said first signal preferably comprising an identifier (ID) of said at least one landing site. In this way, current state information in connection with the landing site can be spread throughout the system to essentially all aircraft (or air participants), thus making the system even more safe and reliable.

In yet another embodiment of the system according to the present invention, in the case of multiple landing sites, said multiple landing sites can be connected in communication for sharing the respective first signals, preferably at least between neighbouring landing sites. This aspect had already been addressed above. Again, sharing said first signals and the information comprised therein increases safety and reliability of the proposed system.

As already stated above, in another embodiment of the system according to the present invention, in the case of multiple landing sites, said multiple landing sites can be connected in communication with an airspace service provider, preferably a U-space provider, for providing at least said first signal to said airspace service provider. Again, this increases safety and reliability of the whole system.

In the embodiments described above, spreading or sharing at least said first signal between landing sites, aircraft and/or airspace service provider enables accessing an information comprised in said first signal by multiple ways and through multiple channels, e.g., aircraft to aircraft, landing site to landing site, aircraft to landing site, landing site to airspace service provider, and airspace service provider to aircraft, to name only a few possibilities.

In this context and in accordance with a further embodiment of the system according to the present invention, said at least one aircraft can be in communication connection with said airspace provider, e.g., for accessing information comprised in said first signal, which is sent from a given landing site to said airspace service provider.

It had been stated above that according to an optional feature of the method according to the present invention, said first signal preferably included at least one of a number and state of individual landing zones (landing pads) at said at least one landing site (vertiport), landing instructions, and, in the case of multiple landing sites, potential alternative landing sites.

Furthermore, the method according to the present invention comprises the feature of landing said at least one aircraft at another landing site based on said first signal and at said second signal from said other landing site, if the respective signals from said at least one landing site (i.e., the original target or destination landing site of the aircraft) indicated that said original target landing site was not or no longer available.

In this context, a third embodiment of the method according to the invention may comprise indicating said other landing site to said at least one aircraft so that said aircraft may adapt its flight path or flight route accordingly.

In a further embodiment of the method according to the present invention, the method may further comprise: transmitting a third signal indicative of at least a current state of said at least one aircraft, said third signal preferably being a distress or priority signal or any other signal derived from a physical state of said at least one aircraft; receiving said third signal at said at least one landing site; and adapting a current state of said at least one landing site based on said third signal.

This particular embodiment had already been described above and enables blocking or reserving particular landing sites for aircraft with higher priority or in a physical state of distress. Higher priority may be accorded to aircraft carrying a particularly valuable load and/or passenger or to police aircraft, etc. A distress signal is just one particular example for said other signal derived from a physical state of said at least one aircraft. As stated before, said physical state may refer to a battery or motor status of said aircraft.

In yet a further embodiment of the method according to the present invention, said method further comprises: detecting, at said at least one landing site, the presence of objects, in particular flying objects, in a space surrounding said at least one landing site (airspace), and deriving said first signal and said second signal from a corresponding detection result; and/or detecting, at said at least one landing site, the presence of objects, in particular ground-based objects, on said at least one landing site, and deriving said first signal and said second signal from a corresponding detection result.

Characteristics and advantages of such an embodiment have already been described above in connection with an embodiment of the system according to the present invention.

A preferred further embodiment of the method according to the present invention may further comprise: in the case of multiple aircraft, relaying said first signal from an aircraft receiving said first signal to other aircraft, said first signal preferably comprising an identifier of said at least one landing site; and/or in the case of multiple landing sites, connecting said multiple landing sites in communication and sharing their respective first signals, preferably at least between neighbouring landing sites.

Characteristics and advantages of such an embodiment have already been described above in connection with an embodiment of the system according to the present invention.

As already stated above in connection with an embodiment of the inventive system, the method according to the present invention may further comprise: in the case of multiple landing sites, connecting said multiple landing sites in communication with an airspace service provider, preferably a U-space provider, and providing at least said first signal to said airspace service provider; and preferably providing said at least first signal to said least one aircraft via said airspace service provider.

Additional features and advantages of the present invention will now be described in connection with exemplary embodiments as shown in the drawings.
- Fig. 1: schematically shows an overall configuration of a system according to the present invention;
- Fig. 2: shows a more detailed configuration of a system according to the present invention and of its operation; and
- Fig. 3: shows a flow chart of a method of operating the system of Fig. 2.

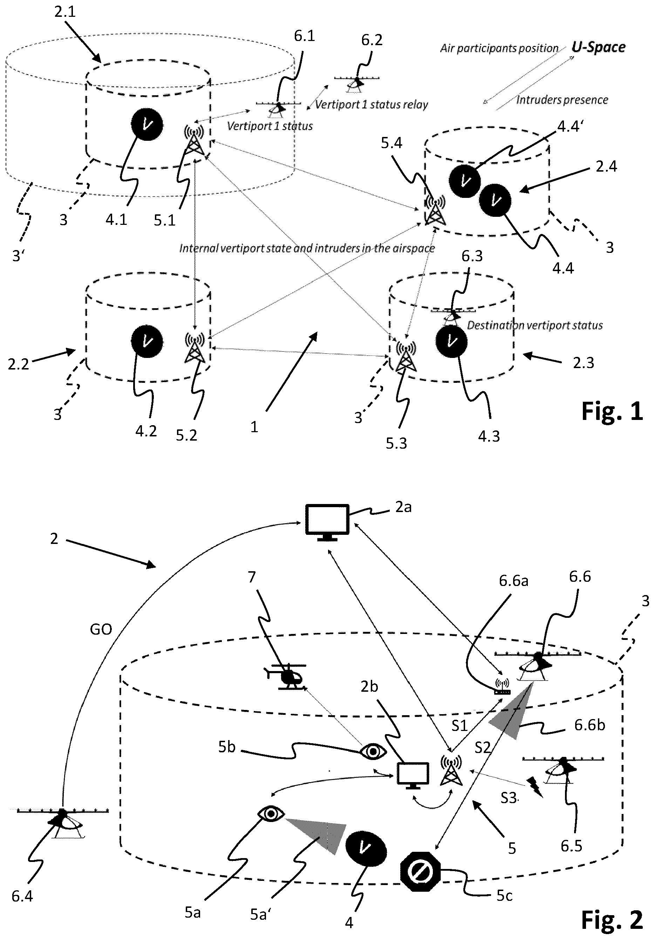

Fig. 1 shows schematically an overall architecture of a system according to the present invention. As a whole, said system is denoted by means of reference numeral 1. System 1 comprises a plurality of individual landing sites denoted 2.1, 2.2, ..., which - in the context of the present application - can also be referred to as vertiports (V). Every landing site or vertiport 2.1, 2.2, ... is surrounded by an airspace 3, only one of which is depicted in Fig. 1. Actual landing zones or landing pads at each of vertiports 2.1, 2.2, ... are denoted by means of reference numerals 4.1, 4.2, ... in Fig. 1. As can be gathered from the drawing, vertiport or landing site 2.4 comprises two such landing zones or landing pads 4.4, 4.4'. All of the vertiports 2.1, 2.2, ... with their respective airspaces 3 are embedded in or served by corresponding U-space, as marked in Fig. 1.

Here and in the following, it will be distinguished between a so-called "ground segment" and a so-called "airborne segment". Said ground segment comprises all equipment (sensors, computers, etc.) which is located on the ground in the vicinity of a given landing site 2.1, 2.2, ... In Fig. 1, said ground segment is symbolised by means of an antenna 5.1, 5.2, ... The airborne segment comprises corresponding devices or equipment, which is/are located onboard an aircraft participating in the system 1 of Fig. 1, so-called air participants. In Fig. 1, such aircraft are denoted by means of reference numerals 6.1 to 6.3.

As noted in Fig. 1, any vertiport 2.1, 2.2, ..., for example vertiport 2.1, by means of its ground segment (antenna 5.1), can communicate a signal comprising status information to any aircraft 6.1 within its airspace 3. In the present application this signal is also referred to as "first signal". In the exemplary embodiment of Fig. 1, this is further denoted as "vertiport 1 status". The aircraft 6.1 is equipped to relay any status information or first signal received from vertiport 2.1 to any aircraft, in this particular exemplary illustration aircraft 6.2, located outside of airspace 3. In Fig. 1, this is denoted as "vertiport 1 status relay".

All vertiports 2.1, 2.2, ... are interconnected via the respective ground segments (antennas 5.1 - 5.4) in order to inform each other about their respective states and about possible intruders (aircraft 6.1) in their respective airspaces 3, as further indicated in Fig. 1 ("internal vertiport state and intruders in the air space"). For instance, aircraft 6.1 may be considered as an intruder in airspace 3 of vertiport 2.1, a corresponding information may be shared between vertiports 2.1, 2.2, ... As further indicated in Fig. 1, any vertiport 2.1, 2.2 may further inform U-space, i.e., an airspace service provider about the presence of an intruder in airspace 3. On the other hand, U-space may provide information on air participants' positions to vertiports 2.1, 2.2, ...

As can be further gathered from Fig. 1, vertiport 2.3, aircraft 6.3 is currently located at/on vertiport 2.3, i.e., a landing pad 4.3 thereof. As indicated in Fig. 1, aircraft 6.3 will enquire about its "destination vertiport status" prior to undertaking a corresponding flight within system 1. As already stated above, corresponding information may be provided by U-space.

In Fig. 1, two dashed cylindrical zones 3, 3' are shown at vertiport 2.1. They depict two different coverage areas. Most probably, the vertiport monitoring system will only be able to protect a specific zone around the vertiports 2.1, 2.2, ... (inner cylinder 3) while the direct communication link (e.g., to aircraft 6.1; double arrow in Fig. 1) will be effective at a much longer range (outer cylinder 3'). For simplicity though, only one zone is displayed for vertiports 2.2-2.4 (Fig. 1) and in Fig. 2 which indicates the operational area of each vertiport (denoted by reference numeral 3).

Fig. 2 shows a detailed embodiment of a given vertiport or landing site 2.1, 2.2, ... and its airspace 3 according to Fig. 1. In Fig. 2, said vertiport or landing site is denoted by means of reference numeral 2. The dashed volume in Fig. 2 symbolises the airspace 3, as mentioned above with reference to Fig. 1. Here and in the following, same reference numerals denote same or at least functionally identical elements, wherein a reference numeral "X" in Fig. 2 replaces reference numeral "X.Y" in Fig. 1.

As already stated with reference to Fig. 1, all vertiports 2.1, 2.2, ... are connected and share - at least with their neighbouring vertiports - the number of landing pads 4.1, 4.2, ... their "clear for landing" status and its overall operational state. As further described with reference to Fig. 1, each vertiport 2.1, 2.2 is connected to the U-space provider operating in the covered area.

According to an exemplary embodiment, ground segment 5.1, 5.2, ... at each vertiport 2.1, 2.2, ... may comprise a detector subsystem (e.g., electrooptical and/or radar sensors) which are configured to detect any vehicles or objects that block a corresponding landing pad 4.1, 4.2, ... Said landing pad is denoted with reference numeral 4 in Fig. 2, and reference numeral 5a denotes said detector subsystem which is able to detect any blocking objects on landing pad 4, as symbolised by means of detection cone 5a' in Fig. 2. Landing pad 4 is declared as blocked as soon as vehicle or object is located on it or close to it. In case of an object or an unidentified vehicle (an unidentified vehicle being vehicle which does not transmit a valid ID within system 1), a corresponding signal is sent to the personal in charge of vertiport 2 and/or to its control center 2a. In Fig. 2, an above-mentioned personal in charge is denoted by means of reference numeral 2b. The control center 2a could be located at another location separate from a vertiport. Specifically, a control center could monitor a plurality or even all vertiports in one city (or district).

The ground segment of vertiport 2 also comprises a radar-based and optical detection system 5b which focuses on detecting any unregistered vehicles, flying objects or animals (without limitation) round vertiport 2. In Fig. 2, reference numeral 7 denotes an unregistered air vehicle. Again, corresponding information can be sent to a personal in charge 2b and/or to the control centre 2a. In case of a valid detection, vertiport 2, by means of suitable ground section transmitting means (antenna 5), emits a multi-level criticality state signal (first signal) to any airspace user, e.g., aircraft 6.6 in Fig. 2, which aircraft 6.6 (as all registered aircrafts 6.4 - 6.6 in Fig. 2, 6.1-6.3 in Fig. 1) comprises suitable receiving means schematically denoted by reference numeral 6.6a. Said multi-level criticality state can be colour-coded, wherein green preferably indicates low criticality, while amber and red denote increasing criticality levels.

More particular, the criticality levels map to the usability of the vertiport 2 (or pad 4), where green is a nominal state vertiport 2, amber is a vertiport integrated mode, in which an intruder 7 has been detected and might endanger vertiport availability, and red is a non-useful vertiport 2.

Vertiport 2 of Fig. 2 uses its ground segment equipment 5 to emit at all time, i. e., on a regular basis, its ID (an identifier) and its current state to all airspace participants 6.4 - 6.6 by means of said first signal, preferably via an RF link, as depicted symbolically by means of connecting arrow S1 (between ground segment equipment 5 and the element denoted 6.6a) in Fig. 2. Additionally, vertiport 2 emits a second signal through so-called ground markers 5c, which ground markers 5c are devised for emitting a second (predefined) signal S2 at least in case the vertiport 2 is in "blocked" state, which state is equivalent to said criticality level "red". However, the invention is not limited to such scenario, wherein said ground markers 5c emit said second signal S2 only in case of a "blocked" vertiport 2. The second signal S2 can also be emitted on a regular basis, and thus constitutes a second independent channel for informing air participants 6.4 - 6.6 about the current state of vertiport 2.

If vertiport 2 is marked or flagged as "blocked", airspace users 6.4 - 6.6 are informed by ground segment 5 which vertiports in the surroundings are free, since this information is constantly being updated between all vertiports 2.1 - 2.4 (Fig. 1). The airborne segment, as defined above, comprises an RF transmitter/emitter (element 6.6a) to communicate with the ground segment 5. Furthermore, said airborne segment comprises an independent (e.g., a camera) dedicated sensor means to read or detect the status of vertiport 2 on an independent channel, which detection may rely on visual spectrum, ultraviolet spectrum or infrared spectrum, without limitation, as defined by the nature of ground marker 5c. In Fig. 2, reference numeral 6.6b symbolises a detection cone of said independent sensor onboard aircraft 6.6 (likewise for aircraft 6.4, 6.5). The airborne segment also provides a communication relay, e.g. denoted at element 6.6a, which can re-broadcast received vertiport status information to all surrounding airspace participants, as already explained above in connection with Fig. 1.

As also shown in Fig. 2, each aircraft, e.g., aircraft 6.4, prior to take-off, requests a final "Go" from its destination vertiport 2 (i.e., control centre 2a) in order to confirm that it is safe to fly there (cf. reference numeral GO in Fig. 2).

Any aircraft (e.g., aircraft 6.6) approaching vertiport 2 transmits its ID (an identifier) and receives from ground segment 5 the current status of vertiport 2 (first signal S1). The closer an aircraft 6.6 is to landing on a designated vertiport 2 with respect to its remaining range or distance, the more critical a possibly unforeseen "blocked" state of vertiport 2 can become.

An approaching aircraft, e.g. aircraft 6.5, can also emit a distress signal (third signal), which is denoted by means of reference numeral S3 in Fig. 2. Signal S3 is received by vertiport 2 at ground segment 5, which can then, by means of control center 2a, lock or reserve an available landing pad 4 or even free such landing pad 4 to allow safe landing of aircraft 6.5. Emission of third signal S3 by aircraft 6.5 can occur by means of an element equivalent to element 6.6a onboard of aircraft 6.5 (not shown).

Most importantly, additional safety with respect to prior art systems is achieved by providing said independent channels (in connection with first signal S1 and second signal S2) in connection with the landing of an aircraft 6.6 at vertiport 2. In other words: aircraft 6.6 can only land at vertiport 2 (on landing pad 4), if both the first signal S1 and the second signal S2 confirm its availability. Signals S1 and S2 are sent via separate, independent channels which - preferably - are based on different technologies.

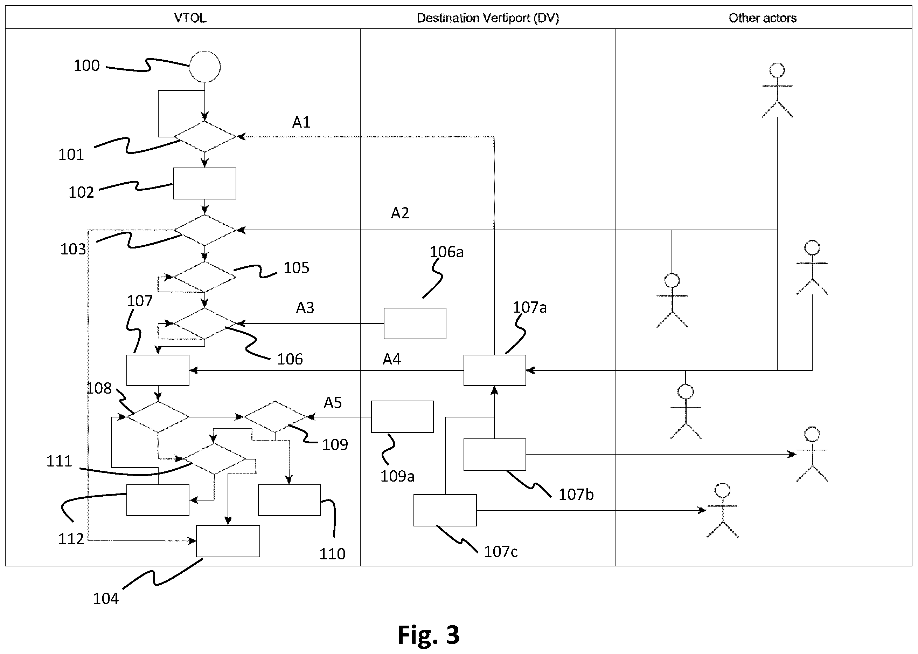

Fig. 3 provides an operation flowchart of the system 1 according to Fig. 1 putting in context a specific aircraft (VTOL) taking off to a specific destination vertiport DV. Said VTOL, during its flight planning process and prior to take-off, polls the destination vertiport's status via multiple redundant links, e.g., directly by means of its own communication equipment or indirectly via the airspace service provider.

Fig. 3 shows, on its left side, (onboard) communications and (onboard) data/signal processing by a VTOL aircraft which participates in system 1 (Fig. 1). The middle column of Fig. 3 shows processes at the destination vertiport (DV), for instance vertiport 2 according to Fig. 2. On the right side of Fig. 3 other actors are shown, which may participate in the system of Fig. 1.

At reference numeral 100, the VTOL is at its starting vertiport (e.g., vertiport 2.3 according to Fig. 1). Subsequently, at 101 it is checked whether or not the DV is clear for landing, e.g., by enquiring directly at the DV or by checking with the airspace service provider. If "YES", the flight is performed at 102. Otherwise ("NO"), step 101 is repeated. Following step 102, step 103 comprises a check whether or not the DV is blocked. If "YES" then VTOL diverts to an alternate vertiport at 104. If not, then the process continues at 105. 105 comprises checking, whether VTOL enters airspace 3 (cf. Fig. 1) of DV. If "YES", it is checked at 106 whether or not a correct ID of DV has been received. If not, step 105 is repeated. If the check at 106 is unsuccessful ("NO"), then step 106 is repeated. If it is successful ("YES") then VTOL receives the DV status at 107.

As shown by arrow A1 in Fig. 3, VTOL receives a DV state at 101 and may get, at 103, the DV state through direct connection, surrounding vertiports and/or traffic ("other actors", arrow A2). At 106, reception of the DV-ID occurs through RF-ID emission 106a by the DV (arrow A3). At 107, DV state, landing instructions and alternate vertiport options are received from DV (107a, arrow A4), which may be in connection with further actors, as shown.

Following 107, it is checked at 108 whether or not DV is clear for landing. If "YES" it is checked at 109 whether or not the ground markers confirm the DV status. If "YES", landing is performed at 110. If step 108 yields that DV is not clear for landing, then it is checked at 111 whether or not DV is unsafe. If this is the case, the process terminates at 104 (divert the vehicle to an alternate vertiport). If not, the process waits at 112 for a predefined time and then returns to 108. If the ground markers do not confirm the status at 109, then the process continues at 111. 109 receives information from the DV ground markers at 109a (arrow A5). Step 107a is connected with landing pads monitoring at 107b and ground-based intruder's detection system 107c. 107b and 107c are connected with further actors, respectively, as shown.

As explained in detail before, if DV acknowledges the flight, VTOL can take off and follow its preplanned flight. During flight, multiple links allow the VTOL to permanently check for a change in the DV state according to air participants message relay, other vertiports and its own connection capability.

As soon as a change of the DV state have been confirmed (e.g., due to priority traffic), the VTOL receives information concerning potential alternate vertiports that are free for landing.

While entering the airspace of the DV, VTOL receives the DV ID and sends its own ID to the DV. If this identification process is successful, VTOL proceeds and receives the status of the DV which includes the state of the respective landing pads, landing instructions and potential alternate vertiport options.

While approaching the vertiport, VTOL receives - preferably via an RF channel - a confirmation for landing, and a ground marker confirms the overall state. Then, landing can be performed.

If any issue arises or if a confirmation cannot be made, VTOL either waits for additional vertiport instructions or diverts to an alternate vertiport.

At the DV, multiple systems ensure that the state message is consolidated by monitoring all landing pads and by detecting any intruders in the DV airspace. An RF link allows to send the vertiport's state message, and the ground marker ensures redundant information transmission in case of RF link failure.

The overall system relies on multiple links to avoid any single point of failure through the U-space, direct vertiport RF broadcast, vehicle to vehicle message relay and other vertiports message broadcast.

## Claims

1. A system (1) for managing aircraft operation, comprising:
at least one aircraft (6.1-6.6), preferably multiple aircraft;
at least one landing site (2; 2.1-2.4) for said aircraft (6.1-6.6), preferably multiple landing sites;
a communication system (5; 6.6a) for transmitting a first signal (S1) indicative of at least a current state of said at least one landing site (2; 2.1-2.4) to said at least one aircraft (6.1-6.6) and for receiving said first signal (S1) at said aircraft (6.1-6.6);
an additional ground-based device (5c) for emitting a second signal (S2), which second signal (S2) is dependent from said current state of said at least one landing site (2; 2.1-2.4); and
an additional signal receiving device (6.6b) onboard said at least one aircraft (6.1-6.6) for receiving said second signal (S2);
wherein the system (1) is configured to perform landing of said at least one aircraft (6.1-6.6) at said at least one landing site (2; 2.1-2.4) based on said first signal (S1) and on said second signal (S2);
said first signal (S1) preferably including at least one of a number and a state of individual landing zones (4; 4.1-4.4') at said at least one landing site (2; 2.1-2.4), landing instructions, and, in the case of multiple landing sites (2; 2.1-2.4), potential alternative landing sites (2; 2.1-2.4).

2. The system (1) of claim 1, wherein said communication system (5; 6.6a) is a bi-directional communication system, which communication system is configured to allow transmitting a third signal (S3) indicative of at least a current state of said at least one aircraft (6.1-6.6) and for receiving said third signal (S3) at said at least one landing site (2; 2.1-2.4), wherein the system (1) is configured to adapt a current state of said at least one landing site (2; 2.1-2.4) based on said third signal (S3).

3. The system (1) of claim 1 or 2, wherein said at least one landing site (2; 2.1-2.4) comprises a first sensor device (5b) for detecting the presence of objects (7), in particular flying objects, in a space (3) surrounding said at least one landing site (2; 2.1-2.4), said first signal (S1) and said second signal (S2) being dependent from an output of said first sensor device (5b), said first sensor device (5b) preferably devised as a radar, lidar or sonar device.

4. The system (1) of any one of claims 1 through 3, wherein said at least one landing site (2; 2.1-2.4) comprises a second sensor device (5a) for detecting the presence of objects, in particular ground-based objects, at said at least one landing site (2; 2.1-2.4), said first signal (S1) and said second signal (S2) being dependent from an output of said second sensor device (5a), said second sensor device (5a) preferably devised as a radar or electro-optical device.

5. The system (1) of any one of claims 1 through 4, wherein said communication system (5; 6.6a) and said additional signal receiving device (6.6b) are based on different technologies.

6. The system (1) of any one of claims 1 through 5, wherein, in the case of multiple aircraft (6.1-6.6), said aircraft (6.1-6.6) comprise a transmitting device (6.6a) for relaying said first signal (S1) from an aircraft (6.1-6.6) receiving said first signal (S1) to another aircraft (6.1-6.6), said first signal (S1) preferably comprising an identifier (ID) of said at least one landing site (2; 2.1-2.4).

7. The system (1) of any one of claims 1 through 6, wherein, in the case of multiple landing sites (2; 2.1-2.4), said multiple landing sites (2; 2.1-2.4) are connected in communication for sharing their respective first signals, preferably at least between neighbouring landing sites (2; 2.1-2.4).

8. The system (1) of any one of claims 1 through 6, wherein, in the case of multiple landing sites (2; 2.1-2.4), said multiple landing sites (2; 2.1-2.4) are connected in communication with an airspace service provider, preferably a U-space provider, for providing at least said first signal (S3) to said airspace service provider.

9. The system (1) of claim 8, wherein said least one aircraft (6.1-6.6) is in communication connection with said airspace service provider.

10. A method of managing aircraft operation, preferably by means of the system according to any one of the preceding claims, comprising:
providing at least one aircraft (6.1-6.6), preferably multiple aircraft (6.1-6.6);
providing at least one landing site (2; 2.1-2.4) for said aircraft (6.1-6.6), preferably multiple landing sites (2; 2.1-2.4);
flying said at least one aircraft (6.1-6.6) to a vicinity of said at least one landing site (2; 2.1-2.4);
receiving, at said at least one aircraft (6.1-6.6), a first signal (S1) indicative of at least a current state of said at least one landing site (2; 2.1-2.4) from said at least one landing site (2; 2.1-2.4) via a first channel;
receiving, at said at least one aircraft (6.1-6.6), a first signal (S1) indicative of at least a current state of said at least one landing site (2; 2.1-2.4) from said at least one landing site (2; 2.1-2.4) via a second channel, said second channel being independent from said first channel;
landing said at least one aircraft (6.1-6.6) at said at least one landing site (2; 2.1-2.4) based on said first signal (S1) and on said second signal (S2) or, in the case of multiple landing sites (2; 2.1-2.4), landing said at least one aircraft (6.1-6.6) at another landing site (2; 2.1-2.4) based on said first signal (S1) and on said second signal (S2) from said other landing site (2; 2.1-2.4);
said first signal (S1) preferably including at least one of a number and a state of individual landing zones (4; 4.1-4.4') at said at least one landing site (2; 2.1-2.4), landing instructions, and, in the case of multiple landing sites (2; 2.1-2.4), potential alternative landing sites (2; 2.1-2.4).

11. The method of claim 10, further comprising:
indicating said other landing site (2; 2.1-2.4) to said at least one aircraft (6.1-6.6).

12. The method of claim 10 or 11, further comprising:
transmitting a third signal (S3) indicative of at least a current state of said at least one aircraft (6.1-6.6), said third signal (S3) preferably being a distress or priority signal or any other signal derived from a physical state of said at least one aircraft (6.1-6.6);
receiving said third signal (S3) at said at least one landing site (2; 2.1-2.4); and
adapting a current state of said at least one landing site (2; 2.1-2.4) based on said third signal (S3).

13. The method of any one of claims 10 through 12, further comprising:
detecting, at said at least one landing site (2; 2.1-2.4), the presence of objects (7), in particular flying objects, in a space (3) surrounding said at least one landing site (2; 2.1-2.4), and deriving said first signal (S1) and said second signal (S2) from a corresponding detection result; and/or
detecting, at said at least one landing site (2; 2.1-2.4), the presence of objects, in particular ground-based objects, on said at least one landing site (2; 2.1-2.4), and deriving said first signal (S1) and said second signal (S2) from a corresponding detection result.

14. The method of any one of claims 10 through 13, further comprising:
in the case of multiple aircraft (6.1-6.6), relaying said first signal (S1) from an aircraft (6.1-6.6) receiving said first signal (S1) to other aircraft (6.1-6.6), said first signal (S1) preferably comprising an identifier (ID) of said at least one landing site (2; 2.1-2.4); and/or
in the case of multiple landing sites (2; 2.1-2.4), connecting said multiple landing sites (2; 2.1-2.4) in communication and sharing their respective first signals (S1), preferably at least between neighbouring landing sites (2; 2.1-2.4).

15. The method of any one of claims 10 through 14, further comprising:
in the case of multiple landing sites (2; 2.1-2.4), connecting said multiple landing sites (2; 2.1-2.4) in communication with an airspace service provider, preferably a U-space provider, and providing at least said first signal (S1) to said airspace service provider; and
preferably providing said at least first signal (S1) to said least one aircraft (6.1-6.6) via said airspace service provider.
